Europäisches Patentamt

(19) European Patent Office

Office européen des brevets

(11) Veröffentlichungsnummer: **0 224 746**
B1

(12) **EUROPÄISCHE PATENTSCHRIFT**

(45) Veröffentlichungstag der Patentschrift:
07.06.89

(21) Anmeldenummer: 86115377.3

(22) Anmeldetag: 06.11.86

(51) Int. Cl.⁴: **F16B 37/12,** F16B 37/04,
B25B 23/08

(54) Klammerartige Blechmutter.

(30) Priorität: 04.12.85 DE 3542841

(43) Veröffentlichungstag der Anmeldung:
10.06.87 Patentblatt 87/24

(45) Bekanntmachung des Hinweises auf die Patenterteilung:
07.06.89 Patentblatt 89/23

(84) Benannte Vertragsstaaten:
DE ES FR GB IT SE

(56) Entgegenhaltungen:
DE-A- 2 620 703
DE-B- 1 728 327
DE-B- 2 364 279
DE-B- 2 828 078
DE-C- 2 418 124
DE-C- 2 849 840
GB-A- 1 352 776
US-A- 4 385 858

(73) Patentinhaber: Firma A. Raymond, Teichstrasse 57,
D-7850 Lörrach(DE)

(72) Erfinder: **Müller, Klaus, Grosse Gass 13,**
**D-7859 Weil-Haltingen(DE)**
Erfinder: **Escher, Lothar, Im Eigen 7, D-7841 Bad**
**Bellingen(DE)**
Erfinder: **Mack, Gerhard, Juchstrasse 19,**
**D-7888 Rheinfelden-Adelhausen(DE)**
Erfinder: **Kramer, Ernst, Unterer Baselblick,**
**D-7854 Inzlingen(DE)**

ACTORUM AG

## Beschreibung

Die Erfindung bezieht sich auf eine klammerartige Blechmutter der im Oberbegriff angegebenen und bspw. durch die DE-B 2 828 078 bekanntgewordenen Art. Diese Blechmuttern werden in der Automobil-Industrie, in der Hausgeräte-Industrie und vielen anderen Industriezweigen seit vielen Jahren verwendet, um mittels Schrauben plattenförmige Bauteile mit anderen Bauteilen zu verbinden. Die Blechmutter wird zu diesem Zweck auf den Rand einer mit einem Loch versehenen Trägerplatte geschoben, bis sich Gewinde und Plattenloch decken.

Da das Aufschieben von Hand oder mittels eines Hammers sehr mühselig und auch mit Verletzungsgefahr verbunden ist, ist man seit längerer Zeit bemüht, die Blechmuttern mit geeigneten Montagevorrichtungen zu setzen. Diese bestehen in der Regel aus einem Klammerhaltekopf mit einem Verschiebekanal und Haltemitteln zum lösbaren Festhalten der seitlich herangeführten Blechmutter und einer druckmittelbetätigbaren Verschiebeeinrichtung zum Ausstoßen und Aufdrücken der Blechmutter auf den Rand der Trägerplatte. Das Heranführen der Blechmutter kann hierbei von Hand oder mit Hilfe eines Magazins erfolgen, das eine Reihe von Blechmuttern enthält, die automatisch eine nach der anderen dem Haltekopf in ausgerichteter Lage zugeführt werden (vgl. DE-B 1 728 327 und GB-A 1 352 776).

Diese sogenannten Montagepistolen werden jedoch nur zögernd an Montagebändern eingesetzt, weil das Aufladen und ständige Auswechseln der Magazine als lästig empfunden wird. Auch lassen die Blechmuttern sich nicht so einfach übereinanderstapeln, weil der Gewindeschenkel mit der Gewindeprägung und die Einführplatte keine glatte Ebene bilden. Außerdem kommt noch hinzu, daß die Gewindeprägung der einen Blechmutter leicht in das Loch des Klammerschenkels der nachfolgenden Blechmutter eintaucht und beim seitlichen Herausstoßen schon einmal verhaken kann.

Aufgabe der Erfindung ist es daher, eine Blechmutter der vorgenannten Art so zu gestalten, daß eine lagebestimmte, absolut störungsfreie Förderung der Blechmutter von einem Sammelbehälter über einen nach Möglichkeit flexiblen Führungskanal bis in den Haltekopf der Montagepistole möglich ist. Die Blechmuttern dürfen sich hierbei nicht verhaken und müssen sich im Sammelbehälter mittels Vibrationsförderer und geeigneter Hindernisse bzw. Schikanen zuverlässig in die gewünschte Lage ausrichten lassen. Die Beförderung im Führungskanal sollte mittels Druckluft möglich sein, um auch von der Sammelstelle weiter entfernt eingesetzte Montagepistolen schnell und sicher zu erreichen.

Die zur Lösung dieser Aufgabe vorgeschlagene Blechmutter läßt sich dank der Führungsstege leicht und problemlos mit der Einführöffnung vorweg auch über größere Distanzen durch einen flexiblen Führungskanal mit rechteckigem Querschnitt nach Art der Rohrpost fördern und sicher in den Haltekopf der Montagepistole hinführen, wobei der Quersteg zwischen den beiden Schenkeln für die nötige Luftangriffsfläche sorgt. Außerdem eignet sich die Blechmutter auch für eine Verschiebung in Querrichtung, wobei die Führungsstege flächig gegeneinander drücken.

Durch die in den Ansprüchen 2 und 3 genannten Maßnahmen ist ferner sichergestellt, daß der Führungskanal durch die Blechmutter in keiner Weise beschädigt oder angekratzt wird, so daß die Zuführung praktisch reibungslos verläuft.

Die Erfindung soll nachfolgend anhand des in der Zeichnung dargestellten Ausführungsbeispiels näher erläutert werden.

Es zeigt

Fig. 1 eine förderbare Blechmutter in Seitenansicht,

Fig. 2 die Blechmutter in Draufsicht,

Fig. 3 die Blechmutter im Schnitt gemäß Linie III–III in Fig. 1,

Fig. 4 eine Montagepistole zum Setzen der Blechmutter mit Schnitt durch den Haltekopf,

Fig. 5 den vergrößerten Haltekopf mit aufdrückbereiter Blechmutter beim Ansetzen an den Rand eines Trägerbleches,

Fig. 6 den Haltekopf beim Aufdrücken der Blechmutter auf das Trägerblech,

Fig. 7 einen Schnitt durch den Haltekopf gemäß Linie VII–VII in Fig. 5 und

Fig. 8 einen Schnitt durch die Verschiebeinrichtung gemäß Linie VIII–VIII in Fig. 5.

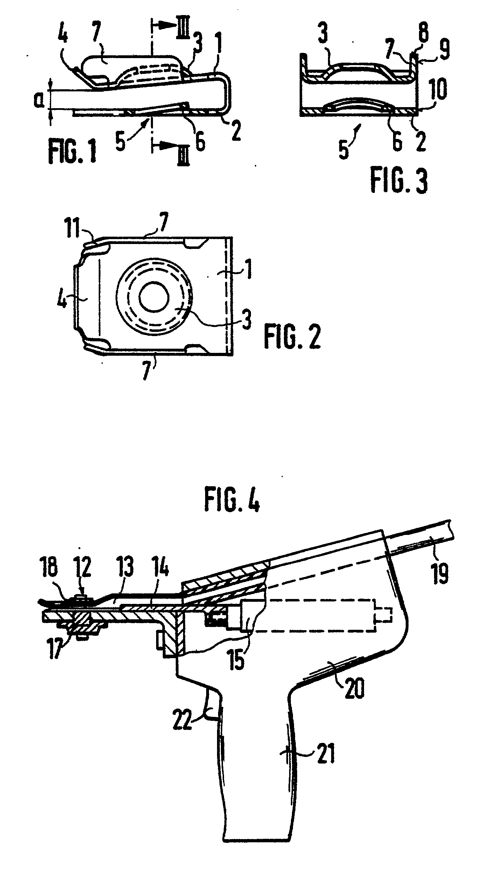

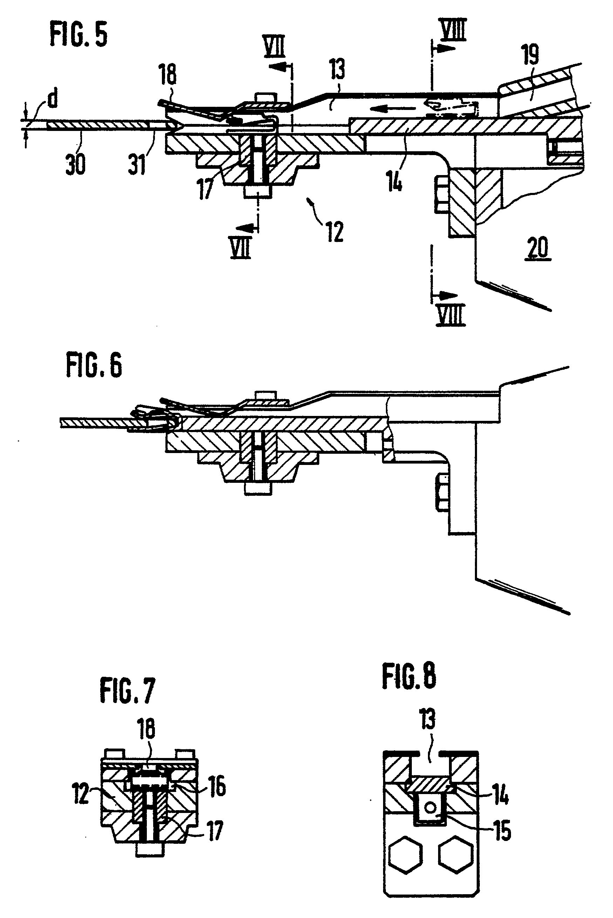

Die in den Fig. 1–3 dargestellte Blechmutter besteht aus einem Gewindeschenkel (1) und einem mit diesem C-förmig verbundenen Klammerschenkel (2). Der Gewindeschenkel (1) trägt in der Mitte eine Gewindeprägung (3) und weist an seinem freien Ende eine schräg wegragende Einführplatte (4) auf. Der Gewindeschenkel (1) verläuft zum freien Ende des Klammerschenkels (2) geneigt und hat an seinem Einführende von letzterem einen Abstand "a", der geringer ist als die Dicke "d" der in Fig. 5 dargestellten Trägerplatte (30), so daß die Blechmutter beim Aufdrücken auf die Trägerplatte sich federnd aufweitet und sich aufgrund der Rückstellkraft zwischen den beiden Schenkeln (1 und 2) an der Platte (30) festklammert.

Der Klammerschenkel (2) ist mit einem Durchgangsloch (5) versehen, welches von einem in Aufsteckrichtung schräg nach hinten hochgebogenen Zentrierring (6) umgeben ist. Der Außendurchmesser des Zentrierringes (6) entspricht hierbei dem Lochdurchmesser des Befestigungsloches (31) am Rand der Trägerplatte (30) (Fig. 5), so daß beim Aufdrücken der Blechmutter auf die Trägerplatte (30) der Zentrierring (6) in diesem Loch (31) einrastet und die Blechmutter zu dem Loch (31) fixiert ist (Fig. 6).

An den beiden Seitenkanten des Gewindeschenkels (1) sind im rechten Winkel zu dessen Ebene Führungsstege (7) angeformt, deren Oberkanten (8) die Einführplatte (4) und beim Ausführungsbeispiel auch die Gewindeprägung (3) knapp überragen und zum Klammerschenkel (2) parallel verlaufen. Die Außenflächen (9) der Führungsstege (7) haben hierbei den gleichen Abstand voneinander wie die Seitenkanten (10) des Klammerschenkels (2), so daß die Blechmutter durch einen Führungskanal (19) mit rechteckigem Querschnitt gefördert werden kann.

Um die Blechmutter problemlos und möglichst reibungsfrei durch einen flexiblen Führungskanal (19) in eine Montagepistole führen zu können (Fig. 4), sind die Führungsstege (7) im vorderen Bereich (11) neben der Einführplatte (4) etwas konisch zusammengedrückt; außerdem sind der Klammerschenkel (2) wie auch die Führungsstege (7) an ihren vorderen Ecken abgerundet.

Die Gewindeprägung (3) ist im vorliegenden Ausführungsbeispiel zum Eindrehen einer selbstschneidenden Blechschraube ausgebildet. Selbstverständlich können hier auch Blechmuttern mit anderen gängigen Gewindeausbildungen bis hin zur Gewindehülse für metrische Gewinde verwendet werden.

Eine zum Setzen der Blechmutter besonders geeignete Montagepistole ist in den Fig. 4 bis 8 dargestellt. Diese Montagepistole besteht im wesentlichen aus einem Haltekopf (12) zum vorübergehenden Festhalten der eingeführten Blechmutter, einem Verschiebekanal (13) und einem in dem Verschiebekanal (13) verschieblich geführten Stößel (14), welcher von einer druckmittelbetätigbaren Kolben-Zylinder-Einheit (15) verschoben wird. Der Verschiebekanal (13) hat einen im wesentlichen rechteckigen Querschnitt mit zwei seitlichen Rillen (16) zur Führung des Stößels (14).

Im Haltekopf (12) ist ein Permanentmagnet (17) eingelassen zum Festhalten der eingeführten Blechmutter. Außerdem befindet sich oberhalb des Magnets (17) eine in den Verschiebekanal (13) eintauchende Federklammer (18), welche die zugeführte Blechmutter zunächst aufhält und beim Vorwärtsschieben der Blechmutter dann nach oben ausweicht und den Weg freimacht.

Oberhalb des Stößels (14) in Verlängerung des Verschiebekanals (13) mündet ein flexibler Führungskanal (19) von rechteckigem Innenquerschnitt, in welchem die Blechmutter in Längsrichtung verschiebbar ist. Verschiebeeinrichtung (14, 15) und Führungskanal (19) sind in einem Gehäuse (20) eingebettet, an dem auch der Haltekopf (12) vorne angeschraubt ist. Unter dem Gehäuse (20) befindet sich ein Handgriff (21) mit einem Auslöserhebel (22) zum Betätigen des Stößels (14), wenn eine Blechmutter ausgeschoben und auf den Rand eines Trägerbleches (30) aufgedrückt werden soll.

## Patentansprüche

1. Klammerartige Blechmutter mit einem eine Gewindeprägung (3) tragenden Gewindeschenkel (1) und einem mit einem Durchgangsloch (5) versehenen Klammerschenkel (2), wobei beide Schenkel in Richtung ihrer freien Enden zueinander geneigt verlaufen und wobei das freie Ende des Gewindeschenkels (1) eine vom Klammerschenkel (2) schräg wegragende Einführplatte (4) aufweist, dadurch gekennzeichnet, daß an den beiden Seitenkanten des Gewindeschenkels (1) im rechten Winkel zu dessen Ebene Führungsstege (7) angeformt sind, deren Oberkanten (8) die Einführplatte (4) überragen und zum Klammerschenkel (2) parallel verlaufen und deren Außenflächen (9) den gleichen Abstand voneinander haben wie die Seitenkanten (10) des Klammerschenkels (2).

2. Blechmutter nach Anspruch 1, dadurch gekennzeichnet, daß die Führungsstege (7) im Bereich (11) neben der Einführplatte (4) konisch zusammenlaufen.

3. Blechmutter nach Anspruch 1 oder 2, dadurch gekennzeichnet, daß der Klammerschenkel (2) wie auch die Führungsstege (7) an ihren vorderen Ecken abgerundet sind.

## Claims

1. A clamp-like sheet-metal nut with a screw threaded limb (1) bearing a pressed screw thread (3) and a clamp limb (2) provided with a through-hole (5), where both sides are oblique to one another in the direction of their free ends, and where the free end of the screw threaded limb (1) has an insertion plate (4) projecting away from it sharply and running parallel to the clamp limb (2), and the outer surfaces of which (9) are the same distance from one another as the side edges (10) of the side of the clamp limb (2).

2. A sheet-metal nut according to Claim 1, characterised in that the guide rods (7) in the aera (11) run in conical fashion towards the insertion plate (4).

3. A sheet-metal nut according to Claim 1 or 2, characterised in that the clamp limb (2) is rounded off at its front end as are the guiding rods (7).

## Revendications

1. Ecrou en tôle formant pince se composant d'une branche filetée (1) portant une empreinte de filetage (3) et d'une branche formant agrafe (2) comportant un trou débouchant (5), ces deux branches se trouvant en l'occurrence repliées l'une vers l'autre dans la direction de leur extrémité libre et l'extrémité libre de la branche filetée (1) comportant en l'occurence une plaquette d'introduction (4) formant obliquement saillie vers l'extérieur, se caractérisant par le fait que la branche filetée (1) comporte au niveau de ses deux rives latérales en formant un angle droit par rapport à son plan, des nervures de guidage d'introduction venues de moulage, dont les bords supérieurs (8) vont plus haut que la plaquette d'introduction (4) et sont disposés parallèlement à la branche formant agrafe (2), et dont les faces extérieures (9) présentent entre elles le même écartement que les rives latérales (10) de la branche formant agrafe (2).

2. Ecrou en tôle formant pince suivant la revendication 1, se caractérisant par le fait que les nervures de guidage d'introduction (7) se rapprochent l'une de l'autre, dans la zone (11) à côté de la plaquette d'introduction, suivant une disposition conique.

3. Ecrou en tôle formant pince suivant la revendication 1 ou 2, se caractérisant par le fait que la branche formant agrafe (2) est, tout comme les nervures de guidage d'introduction (7), arrondie au niveau de ses angles antérieurs.

FIG.1

FIG.2

FIG.3

FIG.4

**FIG. 5**

**FIG. 6**

**FIG. 7**

**FIG. 8**